(19) Europäisches Patentamt European Patent Office Office européen des brevets

(11) **EP 4 650 249 A1**

(12) **EUROPEAN PATENT APPLICATION**

(43) Date of publication:
**19.11.2025 Bulletin 2025/47**

(21) Application number: **25170268.4**

(22) Date of filing: **14.04.2025**

(51) International Patent Classification (IPC):
**B62D 21/07** $^{(2006.01)}$ **B62D 21/08** $^{(2006.01)}$
**B62D 21/15** $^{(2006.01)}$ **B62D 25/20** $^{(2006.01)}$

(52) Cooperative Patent Classification (CPC):
**B62D 21/07; B62D 21/08; B62D 21/157;
B62D 25/20;** B62D 25/2036

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **13.05.2024 JP 2024077657**

(71) Applicant: **MAZDA MOTOR CORPORATION
Hiroshima 730-8670 (JP)**

(72) Inventors:
• **Kamemoto, Eiji
Aki-gun, Hiroshima, 730-8670 (JP)**
• **Tsukamoto, Hideyuki
Aki-gun, Hiroshima, 730-8670 (JP)**
• **Kizaki, Isamu
Aki-gun, Hiroshima, 730-8670 (JP)**

(74) Representative: **Müller-Boré & Partner
Patentanwälte PartG mbB
Friedenheimer Brücke 21
80639 München (DE)**

(54) **VEHICLE LOWER STRUCTURE**

(57) In a frame member, plural first portions (110; 210), plural second portions (111; 211), and paired third portions (112; 212) are formed integrally. The plural first portions (110; 210) are spaced apart from each other in a front-rear direction and each formed to extend in a vehicle width direction. The paired third portions (112; 212) are disposed along the paired side sills, respectively. Each of the plural second portions (111; 211) is connected to the first portion (110; 210) on an inner side in the vehicle width direction, extends obliquely to intersect both of the front-rear direction and the vehicle width direction, and is connected to the side sill (10) via the third portion (112; 212) on an outer side in the vehicle width direction. The plural second portions (111; 211) are provided such that a total length of end portions on each of the outer sides in the vehicle width direction is longer than a total length in the front-rear direction of the plural first portions (110, 210).

**Fig. 7**

EP 4 650 249 A1

**Description**

[Technical Field]

The present invention relates to a lower structure of a floor section.

[Background Art]

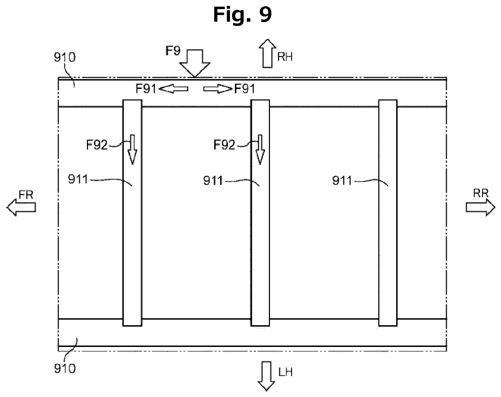

As illustrated in FIG. 9, a vehicle according to the related art includes: paired side sills 910, which are arranged on both sides in a vehicle width direction of a floor section, and each of which extends in a front-rear direction; and plural cross members 911, each of which extends in the vehicle width direction in a manner to connect the paired side sills 910. In such a vehicle, when a load F9 from a lateral side is input between connection portions of the side sill 910 with the cross members 911 in the front-rear direction, a part of the load F9 is divided in a longitudinal direction of the side sill 910 (a load F91), and a part of the load F91 is input to the cross member 911 from the joint portion.

In Patent Literature 1, a configuration is disclosed that a bulkhead is arranged inside the side sill 910 in order to improve load absorption performance during a side collision.

[Citation List]

[Patent Literature]

[Patent Literature 1] JP2021-91341A

[Summary]

[Technical Problem]

However, in the vehicle according to the related art, the plural cross members 911, which are arranged at regular intervals in the front-rear direction, and each of which extends in the vehicle width direction, are connected to the right and left pair of side sills 910. Thus, it is considered that the input load F9 during the side collision cannot be sufficiently transmitted to the cross members 911. For this reason, it is concerned that, in the vehicle according to the related art, depending on the input portion of the side collision load in the side sill 910, the input load is not easily distributed to an opposite side in the vehicle width direction from the input side, and thus the floor section cannot be protected sufficiently during the side collision.

The invention has been made to solve the problem as described above, and an object of the invention is to provide a vehicle lower structure capable of sufficiently protecting a floor section even when an obstacle such as a pole collides from a side.

[Solution to Problem]

The invention is defined in claim 1. Particularly, a lower structure (or a vehicle lower structure, or a vehicle body structure) of a floor section in a vehicle includes paired side sills and a frame member. The paired side sills are disposed on both sides in a vehicle width direction of the floor section and are each formed to extend in a front-rear direction. The frame member is disposed between the paired side sills.

The frame member has plural first portions, plural second portions, and paired third portions. The plural first portions are disposed at mutually-spaced intervals in the front-rear direction in a central portion in the vehicle width direction of the floor section, and are each formed to extend in the vehicle width direction. The plural second portions are each connected to an end portion of the respective first portion, are each formed to extend outward in the vehicle width direction, and are arranged or disposed in the front-rear direction. The paired third portions are each connected to the plural second portions on the outer side in the vehicle width direction, are each formed to extend in the front-rear direction along the respective side sill, and are each connected to the respective side sill.

In the lower structure according to the present invention, the plural second portions are formed such that a total length in the front-rear direction of end portions on each of both outer sides in the vehicle width direction is longer than a total length in the front-rear direction of the plural first portions.

In the vehicle lower structure according to the above invention, the frame member having the plural first portions and the plural second portions is disposed between the paired side sills. The plural second portions are formed such that the total length in the front-rear direction of the end portions on each of the outer sides in the vehicle width direction is longer than the total length in the front-rear direction of the plural first portions. Thus, compared to the above related art in which the end portion of the cross member is directly fixed to the side sill, the side collision load is highly efficiently transmitted to the first portions via the second portions even when a side collision load is input to the side sill from a portion within a wider range than that in the above related art.

That is, in the vehicle lower structure according to the present invention, unlike the related art illustrated in FIG. 9 in which the cross member is directly fixed to the side sill, the second portions are connected to the respective side sill within the wider area in the front-rear direction than the first portions. Accordingly, even when the side collision load is input to the side sill from the portion within the wider area than that in the above related art, the input load is transmitted to the first portions via the second portions and is then distributed to the second portions on the opposite side from the input side. Therefore, in the vehicle lower structure according to the present invention, it is possible to sufficiently protect the floor section even when an obstacle such as a pole collides from the side.

In the lower structure, such a configuration may be adopted that the frame member further has the paired third portions, each of which is connected to the end portions of the plural second portions on the outer side in the vehicle width direction, and each of which is formed to extend in the front-rear direction along the respective side sill and connected to the respective side sill.

In the lower structure according to the above aspect, since the frame member has the third portion that is disposed along the side sill and between the second portion and the side sill, the load input to the side sill during a side collision is efficiently transmitted to the second portion via the third portion.

In the lower structure, each adjacent pair of the second portions in the front-rear direction may be connected to each other in a connection portion with the respective third portion.

In the lower structure according to the above aspect, since each adjacent pair of the second portions in the front-rear direction is connected to each other in the connection portion with the respective third portion, the side collision load that is input from the side sill to the third portion can be distributed to each adjacent pair of the second portions in the front-rear direction. Therefore, compared to a case where each adjacent pair of the second portions in the front-rear direction is spaced apart from each other in the connection portion with the respective third portion, the load can be distributed efficiently, and it is thus effective to protect the floor section during the side collision.

In the lower structure, such a configuration may be adopted that the paired third portions are respectively fixed to the paired side sills.

In the lower structure according to the above aspect, since the third portion is fixed to the side sill, the load input to the side sill during the side collision is efficiently transmitted to the third portion.

In the lower structure, such a configuration may be adopted that at least some of the plural first portions and the plural second portions each have: paired side wall portions that are formed to extend along the vehicle width direction on both sides in the front-rear direction; and a rib that is formed to connect between the paired side wall portions.

In the lower structure according to the above aspect, since at least some of the plural first portions and the plural second portions have the rib that connects the side wall portions, a weight reduction and high rigidity against the load are simultaneously achieved in comparison with a case where the rib is not provided. Therefore, it is further effective to protect the floor section during the side collision while weight of the vehicle is reduced.

In the lower structure, such a configuration may be adopted that the plural second portions include: portions, each of which extends obliquely forward to the outer side in the vehicle width direction from respective one of connection portions with the first portions; and portions, each of which extends obliquely rearward to the outer side in the vehicle width direction from respective one of the connection portions with the first portions, and the portions extending obliquely forward and the portions extending obliquely rearward are alternately arranged or disposed in the front-rear direction.

In the lower structure according to the above aspect, since the portions extending obliquely forward and the portions extending obliquely rearward are alternately arranged or disposed in the front-rear direction, the load that is input to the side sill during the side collision is axially transmitted to each of the second portions, and is also axially transmitted to the first portions connected to the second portions. Therefore, in the vehicle lower structure according to the above aspect, even when the side collision load is input to the side sill from the portion within the wider area than that in the above related art, the load can be axially transmitted to the first portions.

In the lower structure, such a configuration may be adopted that each adjacent pair of the portion extending obliquely forward and the portion extending obliquely rearward in the front-rear direction is connected to each other in the connection portion with the respective first portion.

In the lower structure according to the above aspect, since each adjacent pair of the portion extending obliquely forward and the portion extending obliquely rearward in the front-rear direction is connected to each other in the connection portion with the respective first portion, the load that is axially transmitted to the second portion is highly efficiently transmitted to the first portion.

In the lower structure, such a configuration may be adopted that the frame member further includes paired fourth portions, each of which extends in the front-rear direction and is disposed to connect the connection portions between the plural first portions and the plural second portions.

In the lower structure according to the above aspect, since the frame member further includes the paired fourth portions, each of which connects the connection portions between the plural first portions and the plural second portions, the load that is transmitted to the second portions is also distributed to the adjacent first portions by the fourth portion. Therefore, in the lower structure according to the above aspect, it is possible to further effectively protect the floor section during the side collision.

In the lower structure, such a configuration may be adopted that each of the plural second portions is formed such that a width thereof in the front-rear direction is gradually increased outward in the vehicle width direction from the connection portion with the respective first portion.

In the lower structure according to the above aspect, each of the plural second portions is formed such that the width thereof in the front-rear direction is gradually increased outward in the vehicle width direction from the connection portion with the respective first portion. Thus, even when the side collision load is input to the side sill from the portion within the wider area than that in the above related art, the input load is efficiently transmitted from the third portion to the second portions. Therefore, in the vehicle lower structure according to the above aspect, it is possible to sufficiently protect the floor section during the side collision.

In the lower structure, such a configuration may be adopted that the frame member is formed integrally or unitary.

In the lower structure according to the above aspect, since the frame member is formed integrally or unitary, the number of the components can be reduced in comparison with a case where the portions are formed by separate members. Therefore, it is possible to reduce manufacturing cost from a viewpoint of reducing man-hours for component management at the time of manufacturing and a viewpoint of reducing man-hours for connecting the portions.

In the lower structure, such a configuration may be adopted that each of the paired side sills has an outer side sill that is disposed on the outer side in the vehicle width direction and an inner side sill that is disposed on the inner side in the vehicle width direction and is fixed to the outer side sill, and of the outer side sill and the inner side sill that constitute the respective side sill, at least the inner side sill is integrally formed with the frame member.

In the vehicle lower structure according to the above aspect, of the outer side sill and the inner side sill that constitute the side sill, at least the inner side sill is integrally formed with the frame member. Thus, compared to a case where the inner side sill is formed by a different member from the frame member, the number of the components can be reduced. Therefore, it is possible to reduce the manufacturing cost from the viewpoint of reducing the man-hours for the component management at the time of manufacturing and the viewpoint of reducing the man-hours for fixing the frame member and the inner side sill.

[Advantageous Effects]

In the lower structure according to the present invention, the floor section can be protected even when the obstacle such as the pole collides from the side.

[Brief Description of Drawings]

[FIG. 1] FIG. 1 is a plan view illustrating a partial configuration of a vehicle, to which a lower structure according to a first embodiment of the invention is applied.
[FIG. 2] FIG. 2 is a plan view illustrating ribs that are provided in a first portion and a second portion of a frame member.
[FIG. 3] FIG. 3 is a cross-sectional view illustrating a cross section that is taken along line III-III in FIG. 2.
[FIG. 4] FIG. 4 is a cross-sectional view illustrating a configuration of a rib according to a first modified example.
[FIG. 5] FIG. 5 is a cross-sectional view illustrating a configuration of a rib according to a second modified example.
[FIG. 6] FIG. 6 is a cross-sectional view illustrating a joint structure of the frame member to a side sill.
[FIG. 7] FIG. 7 is a schematic view illustrating a transmission path of a load during a side collision.
[FIG. 8] FIG. 8 is a plan view illustrating a partial configuration of a vehicle, to which a lower structure according to a second embodiment of the invention is applied.
[FIG. 9] FIG. 9 is a plan view illustrating a lower structure of a vehicle according to the related art.

[Description of Embodiments]

A description will hereinafter be made on embodiments of the invention with reference to the drawings. The invention will be exemplified in the embodiments described below, and the invention is not limited to the following embodiments.

In the drawings used in the following description, "FR" indicates a vehicle front direction, "RR" indicates a vehicle rear direction, "LH" indicates a vehicle left direction, "RH" indicates a vehicle right direction, "UP" indicates a vehicle up direction, and "LO" indicates a vehicle down direction.

[First Embodiment]

1. Configuration of Vehicle 1

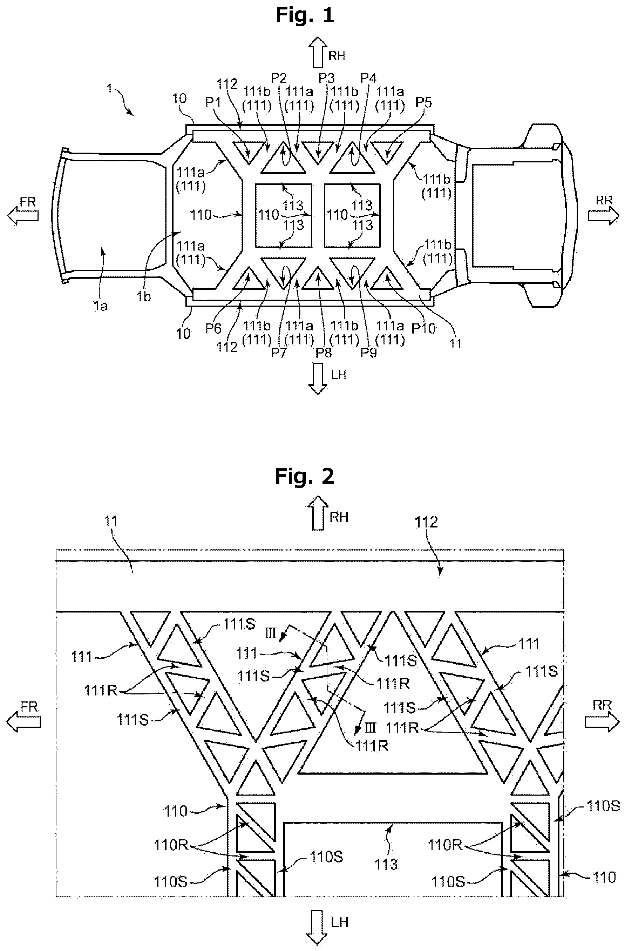

A description will be made on a partial configuration of a vehicle 1, to which a lower structure (or a vehicle lower structure) according to a first embodiment is applied, with reference to FIG. 1. FIG. 1 only extracts and illustrates a part of the lower structure of the vehicle 1, and does not illustrate a power train and the like.

As illustrated in FIG. 1, the vehicle 1 may include a powertrain mounting section 1a in which the powertrain is mounted on a front portion, and includes a floor section 1b as an area that may be located behind the powertrain mounting section 1a and in which one or more occupants ride. The floor section 1b includes paired side sills 10 and a frame member 11.

The paired side sills 10 are disposed on both sides in a vehicle width direction of the floor section 1b and are each formed to extend in a front-rear direction (or a front-rear direction of the vehicle (1)). The frame member 11 is disposed between the paired side sills 10 in a manner to connect the side sill 10 on a vehicle left side and the side sill 10 on a vehicle right side.

The frame member 11 has plural first portions 110, and plural second portions 111, The frame member 11 may further have paired third portions 112, and/or paired fourth portions 113. In a central portion in the vehicle width direction of the floor section 1b, the plural (three as an example) first portions 110 are disposed at mutually-spaced intervals in the front-rear direction and are each formed to extend in the vehicle width direction.

The plural (12 as an example) second portions 111 are each connected to the respective first portion 110, are each formed to extend outward in the vehicle width direction, and are arranged or disposed in the front-rear direction.

The paired third portions 112 are each connected to the plural second portions 111 on an outer side in the vehicle width direction, are each formed to extend in the front-rear direction along the respective side sill 10, and are each fixed to the respective side sill 10.

The paired fourth portions 113 each extend in the front-rear direction and are disposed to connect connection portions P1, P3, P5, P6, P8, P10 between the plural first portions 110 and the plural second portions 111.

Each of the plural first portions 110, the plural second portions 111, the paired third portions 112, and the paired fourth portions 113 may be a long frame portion. In the present embodiment, the plural first portions 110, the plural second portions 111, the paired third portions 112, and the paired fourth portions 113 may be formed integrally or unitary. Alternatively, at least two of the plural first portions 110, the plural second portions 111 and the paired third portions 112 may be formed integrally or unitary. For example, a casting method can be adopted as a method for forming the frame member 11.

The plural second portions 111 may include: portions 111a, each of which extends obliquely forward to the outer side in the vehicle width direction from respective one of the connection portions P1, P3, P5, P6, P8, P10 with the first portions 110; and portions 111b, each of which extends obliquely rearward to the outer side in the vehicle width direction from respective one of the connection portions P1, P3, P5, P6, P8, P10 with the first portions 110. In the front-rear direction, the portions 111a, each of which extends obliquely forward, and the portions 111b, each of which extends obliquely rearward, may be alternately arranged or disposed.

In regard to the second portions 111 in an intermediate portion in the front-rear direction (the second portions 111 excluding the portions 111a arranged on the foremost side and the portions 111b arranged on the rearmost side) of the plural second portions 111, each adjacent pair of the second portions 111 in the front-rear direction may be connected to each other in respective one of connection portions P2, P4, P7, P9 with the third portions 112 without being spaced apart from each other in the front-rear direction.

Furthermore, of the plural second portions 111, each adjacent pair of the second portions 111 in the front-rear direction may be connected to each other in respective one of the connection portions P1, P3, P5, P6, P8, P10 with the first portions 110 and/or the fourth portions 113 without being spaced apart from each other in the front-rear direction.

2. Detailed Configurations of First Portion 110 and Second Portion 111 in Frame Member 11

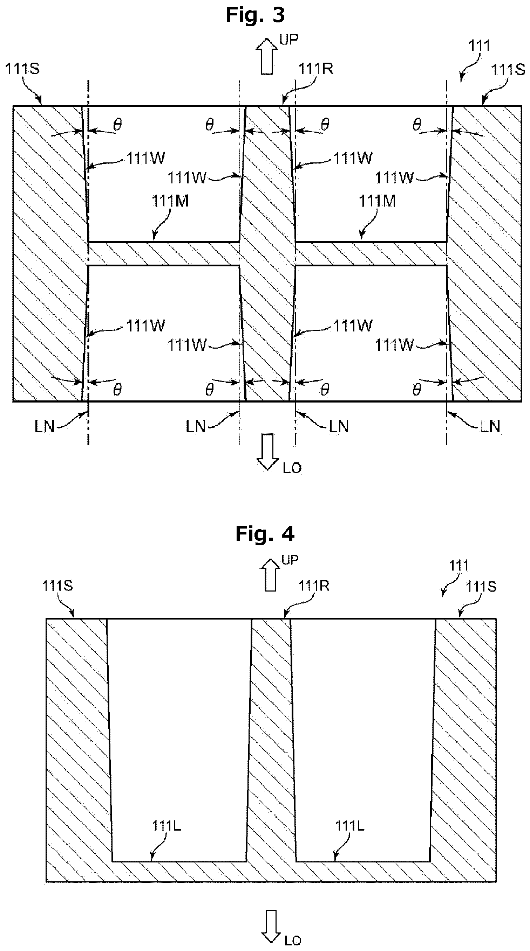

A description will be made on detailed configurations of the first portions 110 and the second portions 111 in the frame member 11 with reference to FIG. 2 to FIG. 5. FIG. 2 is a plan view illustrating ribs 110R, 111R that are respectively included in the first portions 110 and/or the second portions 111 in the frame member 11. FIG. 3 is a cross-sectional view illustrating a cross section that is taken along line III-III in FIG. 2, and FIG. 4 and FIG. 5 each illustrate a modified example.

As illustrated in FIG. 2, at least some of the plural first portions 110 and/or the plural second portions 111 in the frame member 11 may have a pair of side wall portions 110S, 111S and/or ribs 110R, 111R. In the present embodiment, as an example, all of the first portions 110 have the pair of side wall portions 110S and/or the ribs 110R, and all of the second portions 111 have the pair of side wall portions 111S and/or the ribs 111R.

In the first portion 110, the paired side wall portions 110S may each be formed to extend in the vehicle width direction, and may be formed to oppose each other in the front-rear direction. In the second portion 111, the paired side wall portions 111S may each be formed to extend in an oblique direction that is inclined with respect to the vehicle width direction and the front-rear direction, and may be formed to oppose each other in a direction orthogonal to the extending direction of the side wall portions 111S.

In the first portion 110, the plural ribs 110R may be formed to connect between the paired side wall portions 110S in the first portion 110. In the second portion 111, the plural ribs 111R may be formed to connect the paired side wall portions 111S in the second portion 111.

For example, as illustrated in FIG. 3, in an intermediate portion in an up-down direction, each of the plural second portions 111 in the present embodiment has an intermediate base 111M that connects the pair of side wall portions 111S, and the rib 111R is provided to rise in both directions of the up-down direction with the intermediate base 111M as a starting point. Side wall surfaces 111W of the pair of side wall portions 111S and side wall surfaces 111W of the rib 11R may each be formed to have a draft angle $\theta$ with respect to an imaginary line LN drawn in a vertical direction.

Although not illustrated, the plural first portions 110 each have the same configuration as that illustrated in FIG. 3.

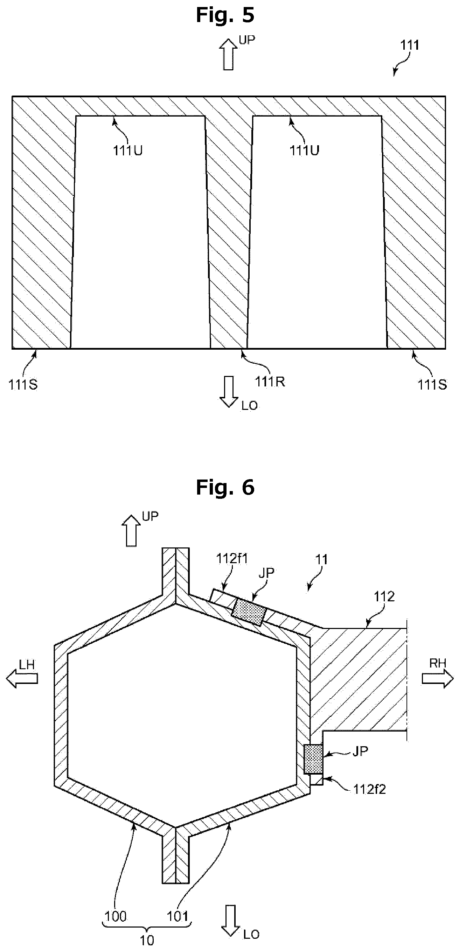

Each of the plural first portions 110 and the plural second portions 111 may have a configuration as illustrated in FIG. 4 or FIG. 5. For example, as illustrated in FIG. 4, the plural second portions 111 in a first modified example may each have, in a lower portion, a lower base 111L that connects the paired side wall portions 111S, and the rib 111R may be provided to rise upward with the lower base 111L as a starting point. The plural first portions 110 may each have the same configuration as that illustrated in FIG. 4.

As illustrated in FIG. 5, the plural second portions 111 in a second modified example may each have, in an upper portion, an upper base 111U that connects the paired side wall portions 111S, and the rib 111R may be provided to be hung downward with the upper base 111U as a starting point. Each of the plural first portions 110 may each have the same configuration as that illustrated in FIG. 5.

3. Fixed Structure of Frame Member 11 to Side Sill 10

A description will be made on a fixed (or fixing) structure of the frame member 11 to the side sill 10 with reference to FIG. 6. FIG. 6 is a cross-sectional view illustrating the side sill 10 disposed on the left side and a part of the third portion 112 in the frame member 11.

As illustrated in FIG. 6, the side sill 10 of the vehicle 1 according to the present embodiment may be formed by a combination of an outer side sill 100 and an inner side sill 101. The outer side sill 100 is a portion that is disposed on the outer side in the vehicle width direction. The inner side sill 101 is a portion that is disposed on the inner side in the vehicle width direction.

The outer side sill 100 and the inner side sill 101 may each have a hat-like cross-sectional shape, and may constitute the side sill 10 having a closed cross-sectional structure by fixing flange portions thereof to each other.

The third portion(s) 112 in the frame member 11 may have: a flange portion 112f1 that is formed along a part of an upper surface of the inner side sill 101; and a flange portion 112f2 that is formed along a part of an inner surface of the inner side sill 101.

The flange portions 112f1, 112f2 of the third portion 112 are each fixed to the inner side sill 101 in a fixed portion JP. In this way, the frame member 11 is fixed to the side sill 10. A method for fixing the third portion 112 to the inner side sill 101 is not particularly limited. For example, fastening using a bolt or a rivet, welding (e.g., resistance welding, or laser welding), or the like can be employed.

In the present embodiment, the outer side sill 100 and the inner side sill 101 are separate members from the frame member 11, but at least the inner side sill 101 may be integrally or unitary formed with the frame member 11.

4. Relationship Between Second Portions 111 and First Portions 110

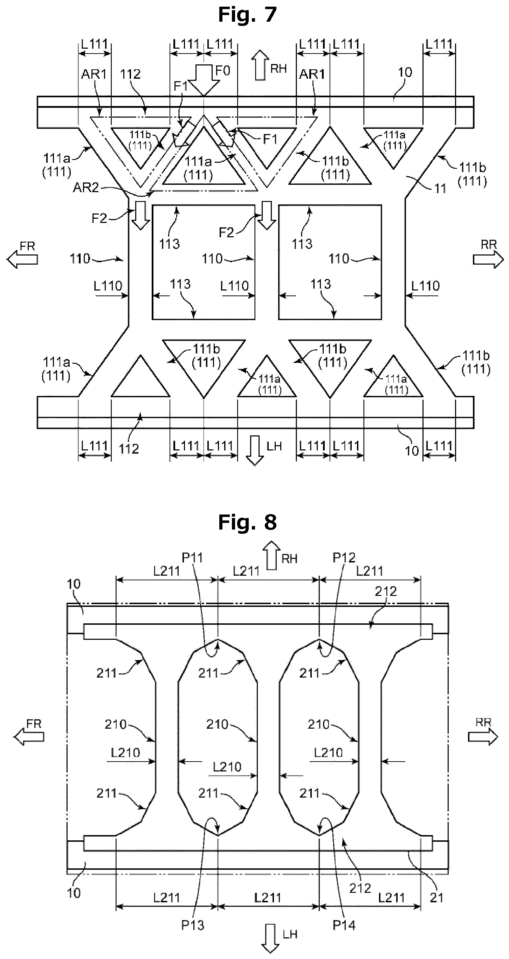

A description will be made on a relationship between the second portion 111 and the first portion 110 of the frame member 11 with reference to FIG. 7. FIG. 7 is a plan view in which the side sills 10 and the frame member 11 are seen from above.

As illustrated in FIG. 7, in the present embodiment, the first portions 110, the second portions 111, the third portions 112, and the fourth portions 113 may each have an elongated pillar shape. In the present embodiment, as an example, widths of the portions 110 to 113 may be uniform particularly in a longitudinal direction.

The first portions 110 each have a length (width) L110 in the front-rear direction. The lengths L110 of the plural first portions 110 in the front-rear direction may differ from each other.

An outer end portion in the vehicle width direction of each of the second portions 111 has a length L111 in the front-rear direction. The lengths L111 of the end portions of the plural second portions 111 in the front-rear direction may differ from each other.

In the present embodiment, the plural first portions 110 and the plural second portions 111 are formed to satisfy the following relationship.

$$6 \times L111 > 3 \times L110 \ldots \text{(Expression 1)}$$

That is, in the present embodiment, the plural second portions 111 are formed such that a total length (i.e., $6 \times$ L111) in the front-rear direction of the end portions on each of both of the outer sides (each of the right and left sides) in the vehicle width direction is longer than a total length (i.e., $3 \times$ L110) in the front-rear direction of the plural first portions 110.

5. Arrangement of Second Portions 111, Third Portions 112, and Fourth Portions 113

A description will be made on arrangement of the second portions 111, the third portions 112, and the third portions 113 of the frame member 11 with reference to FIG. 7.

As illustrated in FIG. 7, the third portion 112 and the fourth portion 113 may be arranged side by side with a space being provided therebetween in the vehicle width direction. As described above, the second portions 111 include the portions 111a extending obliquely forward and the portions 111b extending obliquely rearward, and the portions 111a and the portions 111b are alternately arranged or disposed in the front-rear direction.

When the portion 111a, which extends obliquely forward, and the portion 111b, which is arranged behind the portion 111a and extends obliquely rearward, are extracted, in the frame member 11, the portion 111a, the portion 11b, and the third portion 112 constitute a structure (triangular structure) AR1 having a triangular shape in a plan view.

When the portion 11b, which extends obliquely rearward, and the portion 111a, which is arranged behind the portion 11b and extends obliquely forward, are extracted, in the frame member 11, the portion 111b, the portion 111a, and the fourth portion 113 constitute a structure (triangular structure) AR2 having a triangular shape in the plan view.

Each of the triangular structures AR1, AR2 may be a portion that has a similar structure to a so-called truss structure in a point of having a triangular hollow portion therein in the plan view. In the frame member 11 of the present embodiment, each node between the second portion 111 and each of the third portion 112 and the fourth portion 113 may not be fastened by a bolt or a rivet, and the portions 111 to 113 may be integrally or unitary connected at each of the nodes.

The frame member 11 in the present embodiment has a configuration that the triangular structures AR1 and the triangular structures AR2 are alternately arranged or disposed in the front-rear direction on both of the outer sides in the vehicle width direction of the first portions 110, each of which extends in the vehicle width direction.

6. Effects

In the vehicle 1, to which the lower structure according to the present embodiment is applied, the frame member 11 having the plural first portions 110 and the plural second portions 111 is disposed between the paired side sills 10. The plural second portions 111 are formed such that the total length (i.e., $6 \times$ L111) in the front-rear direction of the end portions on each of both of the outer sides in the vehicle width direction is longer than the total length (i.e., $3 \times$ L110) in the front-rear direction of the plural first portions 110. Thus, even when a side collision load F0 is input to the side sill 10 from a portion within a wider range than that in the above related art, as indicated by arrows F1, F2, the input side collision load F0 is efficiently transmitted to the first portions 110 via the second portions 111.

That is, in the vehicle 1, to which the lower structure according to the present embodiment is applied, unlike the related art illustrated in FIG. 9 in which the cross member 911 is directly connected to the side sill 910, the second portions 111 are connected to the respective side sill 10 within a wider area in the front-rear direction than the first portions 110. Accordingly, even when the side collision load F0 is input to the side sill 10 from the portion within the wider area than that in the above related art, the input side collision load F0 is transmitted to the first portions 110 via the second portions 111 and is then distributed to the second portions 111 on the opposite side from the load input side. Therefore, in the vehicle 1, the floor section 1b can be protected sufficiently even when an obstacle such as a pole collides from the side.

Particularly, in the vehicle 1, to which the lower structure according to the present embodiment is applied, the frame member 11 has the third portions 112, each of which is disposed along the respective side sill 10 and is disposed between the second portions 111 and the respective side sill 10. Accordingly, the collision load F0, which is input to the side sill 10 during the side collision, is distributed to the third portion 112 in both of the front direction and the rear direction, and is then efficiently transmitted to the second portions 111.

Further particularly, in the vehicle 1, to which the lower structure according to the present embodiment is applied, each adjacent pair of the second portions 111 in the front-rear direction is connected to each other in respective one of the connection portions P2, P4, P7, P9 with the third portion 112. Thus, the side collision load that is input from the side sill 10 to the third portion 112 can be distributed highly efficiently to the second portions 111 that are adjacent to each other in the front-rear direction. Therefore, compared to a case where each adjacent pair of the second portions 111 in the front-rear direction is spaced apart from each other in respective one of the connection portions P2, P4, P7, P9 with the third portions 112, the load can be distributed efficiently, and it is thus effective to protect the floor section 1b during the side collision.

Further particularly, in the vehicle 1, for which the lower structure according to the present embodiment is adopted, as illustrated in FIG. 6, since the third portion 112 is fixed to the side sill 10, the collision load F0, which is input to the side sill 10 during the side collision, is efficiently transmitted to the third portion 112.

Further particularly, in the vehicle 1, for which the lower structure according to the present embodiment is adopted, since the plural first portions 110 and the plural second portions 111 have the ribs 110R, 111R that connect the side wall portions 110S, 111S, respectively, a weight reduction and high rigidity against the collision load are simultaneously achieved in comparison with a case where the ribs 110R, 111R are not provided. Therefore, it is further effective to protect the floor section 1b during the side collision while weight of the vehicle 1 is reduced.

Further particularly, in the vehicle 1, for which the lower structure according to the present embodiment is adopted, the second portions 111 have the portions 111a extending obliquely forward and the portions 111b extending obliquely rearward, the portions 111a and the portions 111b being alternately disposed in the front-rear direction. Accordingly, the side collision load F0, which is input to the side sill 10 during the side collision, is transmitted as an axial force to each of the second portions 111, and is also axially transmitted to the first portions 110 that are respectively connected to the second portions 111. Therefore, in the vehicle 1, even when the side collision load F0 is input to the side sill 10 from the portion within the wider area than that in the above related art, the side collision load F0 can be axially transmitted to the first portions 110.

Further particularly, in the vehicle 1, to which the lower structure according to the present embodiment is applied, each adjacent pair of the portion 111a extending obliquely forward and the portion 111b extending obliquely rearward in the front-rear direction is connected to each other in respective one of the connection portions P1, P3, P5, P6, P8, P10 with the first portions 110. Therefore, the load that is axially transmitted to the second portions 111 is highly efficiently transmitted to the first portions 110.

Further particularly, in the vehicle 1, to which the lower structure according to the present embodiment is applied, since the frame member 11 further has the paired fourth portions 113 that connect the connection portions P1, P3, P5, P6, P8, P10 between the plural first portions 110 and the plural second portions 111, the load that is transmitted to the second portions 111 is also distributed to the adjacent first portions 110 in the front-rear direction by the fourth portions 113. Therefore, in the lower structure according to the present embodiment, it is possible to further effectively protect the floor section 1b during the side collision.

Further particularly, in the vehicle 1, to which the lower structure according to the present embodiment is applied, since the plural first portions 110, the plural second portions 111, the pair of third portions 112, and the pair of fourth portions 113 are formed integrally, the number of the components can be reduced in comparison with a case where the portions 110 to 113 are formed by separate members. Therefore, it is possible to reduce manufacturing cost from a viewpoint of component management at the time of manufacturing.

As it has been described so far, in the vehicle 1, to which the lower structure according to the present embodiment is applied, the floor section 1b can be protected sufficiently even when the obstacle such as the pole collides from the side.

[Second Embodiment]

A description will be made on a configuration of a vehicle, to which a lower structure according to a second embodiment is applied, with reference to FIG. 8. The vehicle, to which the lower structure according to the present embodiment is applied, has the same configuration as that in the above first embodiment except for a configuration of a frame member 21. Thus, the following description will be made on the configuration of the frame member 21 as a different point from the above first embodiment.

As illustrated in FIG. 8, the frame member 21 in the present embodiment has plural (three as an example) first portions 210, and plural (six as an example) second portions 211. The frame member 21 may further have a pair of third portions 212. Similar to the plural first portions 110 in the above first embodiment, the plural first portions 210 are disposed at mutually-spaced intervals in the front-rear direction, in the central portion of the floor section 1b in the vehicle width direction, and are each formed to extend in the vehicle width direction.

Similar to the pair of third portions 112 in the above first embodiment, the paired third portions 212 are each connected to the plural second portions 211 on the outer side in the vehicle width direction, are each formed to extend in the front-rear direction along the respective side sill 10, and are each fixed to the respective side sill 10.

The plural second portions 211 are each connected to the respective first portion 210 and may each be formed in a fan shape such that a width thereof in the front-rear direction is increased or gradually increased outward in the vehicle width direction from a connection portion with the respective first portion 210. On each of the outer sides in the vehicle width direction, the plural second portions 211 may be arranged or disposed side by side in the front-rear direction.

The plural first portions 210, the plural second portions 211, and the pair of the third portions 212 may be formed integrally or unitary. Alternatively, the plural first portions 210 and the plural second portions 211 may be formed integrally or unitary. Similar to the above first embodiment, for example, the casting method can be adopted as a method for forming the frame member 21.

Of the plural second portions 211, each adjacent pair of the second portions 211 in the front-rear direction may be connected to each other in respective one of connection portions P11 to P14 with the second portions 212 without being spaced apart from each other in the front-rear direction.

In the present embodiment, the first portions 210 and the third portions 212 may each have an elongated pillar shape. Also, in the present embodiment, as an example, widths of the first portions 210 and the third portions 212 are uniform particularly in the longitudinal direction.

The first portions 210 each have a length (width) L210 in the front-rear direction. The lengths L210 of the plural first portions 210 in the front-rear direction may differ from each other.

An outer end portion in the vehicle width direction of each of the second portions 211 (a connection length with the third portion 212) has a length L211. The lengths L211 of the end portions of the plural second portions 211 in the front-rear direction may differ from each other.

In the present embodiment, the plural first portions 210 and the plural second portions 211 are formed to satisfy the following relationship.

$$3 \times L211 > 3 \times L210 \ ... \ (\text{Expression 2})$$

That is, also in the present embodiment, the plural second portions 211 are formed such that a total length (i.e., $3 \times L211$) in the front-rear direction of the end portions on each of both of the outer sides (each of the right and left sides) in the vehicle width direction is longer than a total length (i.e., $3 \times L210$) in the front-rear direction of the plural first portions 210.

In the vehicle, for which the lower structure according to the present embodiment is adopted, the structure of the frame member 21 differs from that in the above first embodiment. However, since the frame member 21 is configured to satisfy the above relational expression 2, it is possible to exert the same effects as those in the above first embodiment. That is, also in the lower structure according to the present embodiment, each of the plural second portions 211 is formed such that the width thereof in the front-rear direction is gradually increased outward in the vehicle width direction from the connection portion with the respective first portion 210. Thus, even when the side collision load is input to the side sill 10 from the portion within the wider area than that in the above related art, the load is efficiently transmitted from the third portion 212 to the second portions 211. Therefore, also in the lower structure according to the present embodiment, it is possible to sufficiently protect the floor section during the side collision.

Particularly, in the present embodiment, similar to the above first embodiment, such a configuration may be adopted that at least some of the plural first portions 210 and the plural second portions 211 each have a pair of side wall portions and ribs.

[Other Modified Examples]

In the above first embodiment, the frame member 11 has the third portions 112 and the fourth portions 113. In the above second embodiment, the frame member 21 has the third portions 212. However, it is not essential in the invention that the frame member has the third portion and the fourth portion. In the case where the frame member does not have the third portion, each of the second portions may be fixed to the respective side sills.

In the above first embodiment and the above second embodiment, such a structure is adopted that the third portions 112, 212 of the frame members 11, 21 are directly fixed to the side sills 10. However, in the invention, another member may be interposed between the third portion and the side sill. As long as it is configured that the collision load input to the side sill is transmitted to the frame member, any of various connection structures can be adopted.

In the above first embodiment, the second portions 111 of the frame member 11 have the portions 111a extending obliquely forward and the portions 111b extending obliquely rearward. However, the invention is not limited thereto. For example, the second portions may only have the portions extending obliquely forward, or may only have the portions extending obliquely rearward.

In the above second embodiment, the second portion 211 of the frame member 21 has a planar shape that is formed by combining two trapezoidal portions. However, the invention is not limited thereto. For example, it may have a shape that the length (the width) in the front-rear direction is increased exponentially or increased quadratically in the plan view.

In the above first embodiment, the first portions 110 and the second portions 111 of the frame member 11 have the side wall portions 110S, 111S and the ribs 110R, 111R, respectively. However, the invention is not limited thereto. Each of the first portion and the second portion may be a portion having a solid rod shape and may not have the ribs. Alternatively, only some of the plural first portions and the plural second portions may have the ribs.

In the above first embodiment and the above second embodiment, the frame members 11, 21 are each formed integrally. However, the invention is not limited thereto. For example, the first portion and the second portion may be fastened by the bolt or the rivet or may be welded.

The frame member does not always have to be formed by using a metal material. For example, the frame member may be formed by using a fiber-reinforced resin material (such as CFRP or GFRP) or may be formed by using a composite of a resin material (including the fiber-reinforced resin material) and the metal material.

In the above first embodiment and the above second embodiment, sizes in the up-down direction of the frame members 11, 21 are not particularly described. However, in the invention, various changes can be made to the sizes in the up-down direction. For example, the size of the frame member in the up-down direction may differ for each region in the front-rear direction or the vehicle width direction, or may differ in the first portion and the second portion.

In the above first embodiment and the above second embodiment, a floor panel is not described. However, the floor panel can be formed integrally as a part of the frame member, or the floor panel can be fixed to the frame member.

[Reference Signs List]

1: vehicle
1b: floor section
10: side sill
11, 21: frame member
110, 210: first portion
110R: rib
111, 211: second portion
111R: rib
112, 212: third portion

**Claims**

1. A lower structure of a floor section (1b) in a vehicle (1), the lower structure comprising:

   paired side sills (10) which are disposed on both sides in a vehicle width direction of the floor section (1b), and each of which is formed to extend in a front-rear direction; and
   a frame member (11; 21) that is disposed between the paired side sills (10), wherein
   the frame member (11; 21) has:

   plural first portions (110; 210) that are disposed at mutually-spaced intervals in the front-rear direction in a central portion in the vehicle width direction of the floor section (1b), and are each formed to extend in the vehicle width direction; and
   plural second portions (111; 211), each of which is connected to an end portion of the respective first portion (110; 210), each of which is formed to extend outward in the vehicle width direction, and which are arranged in the front-rear direction, and
   the plural second portions (111; 211) are formed such that a total length in the front-rear direction of end portions on each of both outer sides in the vehicle width direction is longer than a total length in the front-rear direction of the plural first portions (110; 210).

2. The lower structure according to claim 1, wherein
   the frame member (11; 21) further has paired third portions (112; 212), each of which is connected to the end portions of the plural second portions (111; 211) on the outer side in the vehicle width direction, and each of which is formed to extend in the front-rear direction along the respective side sill (10) and connected to the respective side sill (10).

3. The lower structure according to claim 2, wherein
   each adjacent pair of the second portions (111; 211) in the front-rear direction is connected to each other in a connection portion (P2, P4, P7, P9) with the respective third portion (112; 212).

4. The lower structure according to claim 2 or 3, wherein
   the paired third portions (112; 212) are respectively fixed to the paired side sills (10).

5. The lower structure according to any one of the preceding claims, wherein
at least some of the plural first portions (110; 210) and the plural second portions (111; 211) each have: paired side wall portions (110S, 111S) that are formed to extend along the vehicle width direction on both sides in the front-rear direction; and a rib (110R, 210R) that is formed to connect between the paired side wall portions (110S, 111S).

6. The lower structure according to claim 5, wherein

the at least some of the plural first portions (110; 210) and the plural second portions (111; 211) each have a base (111M) connecting the paired side wall portions (110S, 111S), and
the rib (110R, 210R) is configured to rise from the based (111M).

7. The lower structure according to any one of the preceding claims, wherein

the plural second portions (111; 211) include: portions (111a), each of which extends obliquely forward to the outer side in the vehicle width direction from respective one of connection portions (P1, P3, P5, P6, P8, P10) with the first portions (110; 210); and portions (111b), each of which extends obliquely rearward to the outer side in the vehicle width direction from respective one of the connection portions with the first portions (110; 210), and
the portions (111a, 111b) extending obliquely forward and the portions extending obliquely rearward are alternately arranged in the front-rear direction.

8. The lower structure according to claim 7, wherein
each adjacent pair of the portion (111a) extending obliquely forward and the portion (111b) extending obliquely rearward in the front-rear direction is connected to each other in the connection portion (P1, P3, P5, P6, P8, P10) with the respective first portion (110; 210).

9. The lower structure according to any one of the preceding claims, wherein
the frame member (11; 21) further includes paired fourth portions (113)_, each of which extends in the front-rear direction and is disposed to connect the connection portions (P1, P3, P5, P6, P8, P10) between the plural first portions (110; 210) and the plural second portions (111; 211).

10. The lower structure according to any one of the preceding claims, wherein
each of the plural second portions (111; 211) is formed such that a width thereof in the front-rear direction is gradually increased outward in the vehicle width direction from the connection portion with the respective first portion (110; 210).

11. The lower structure according to any one of the preceding claims, wherein
the frame member (11; 21) is formed integrally or unitary.

12. The lower structure according to any one of the preceding claims, wherein

each of the paired side sills (10) has: an outer side sill (100) that is disposed on an outer side in the vehicle width direction; and an inner side sill (101) that is disposed on an inner side in the vehicle width direction and is fixed to the outer side sill (100), and
at least the inner side sill (101) is integrally formed with the frame member (11; 21).

13. The lower structure according to claim 12 referring to claim 2, wherein
each of the third portions (112) has a flange portion (112f1, 112f2) formed along the inner side sill (101) and fixed to the inner side sill (101).

14. The lower structure according to any one of the preceding claims, wherein
each of the plural second portions (111; 211) has a fan shape.

15. A vehicle (1) comprising the lower structure according to any one of the preceding claims.

## Fig. 1

## Fig. 2

## Fig. 3

## Fig. 4

## Fig. 5

## Fig. 6

## Fig. 7

## Fig. 8

# Fig. 9

## EUROPEAN SEARCH REPORT

**Application Number**

EP 25 17 0268

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/264177 A1 (KAWAGUCHI TAICHI [JP]) 15 September 2016 (2016-09-15) | 1-4, 7-12,14, 15 | INV. B62D21/07 B62D21/08 |
| Y | * paragraphs [0026] - [0028] * | 5,6 | B62D21/15 |
| A | * figures 1,3,4 * | 13 | B62D25/20 |
| X | US 2015/251700 A1 (CHOI CHI HOON [KR] ET AL) 10 September 2015 (2015-09-10) | 1-4,7-9, 11,14,15 | |
| A | * figures 1,2,5 * * paragraphs [0030], [0034] - [0043] * | 5,6,10, 12,13 | |
| Y | US 5 496 067 A (STOLL DANIEL [CH] ET AL) 5 March 1996 (1996-03-05) | 5,6 | |
| A | * figures 1,2 * * column 1, line 42 - column 1, line 48 * | 1 | |
| A | US 6 805 401 B2 (HONDA MOTOR CO LTD [JP]) 19 October 2004 (2004-10-19) * figures 1,9,10 * * column 7, line 19 - column 7, line 43 * | 1,12 | |

**TECHNICAL FIELDS SEARCHED (IPC)**

B62D

The present search report has been drawn up for all claims

| Place of search | Date of completion of the search | Examiner |
|---|---|---|
| The Hague | 1 September 2025 | Socolov, Elena |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 17 0268

This annex lists the patent family members relating to the patent documents cited in the above-mentioned European search report.
The members are as contained in the European Patent Office EDP file on
The European Patent Office is in no way liable for these particulars which are merely given for the purpose of information.

01-09-2025

| Patent document cited in search report | | | Publication date | Patent family member(s) | | Publication date |
|---|---|---|---|---|---|---|
| US 2016264177 | A1 | | 15-09-2016 | EP | 3067253 A2 | 14-09-2016 |
| | | | | JP | 6478031 B2 | 06-03-2019 |
| | | | | JP | 2016168922 A | 23-09-2016 |
| | | | | US | 2016264177 A1 | 15-09-2016 |
| US 2015251700 | A1 | | 10-09-2015 | CN | 104890732 A | 09-09-2015 |
| | | | | DE | 102014223286 A1 | 10-09-2015 |
| | | | | JP | 6457763 B2 | 23-01-2019 |
| | | | | JP | 2015168420 A | 28-09-2015 |
| | | | | KR | 20150103991 A | 14-09-2015 |
| | | | | US | 2015251700 A1 | 10-09-2015 |
| US 5496067 | A | | 05-03-1996 | CN | 1104164 A | 28-06-1995 |
| | | | | DE | 69408068 T2 | 20-08-1998 |
| | | | | EP | 0646516 A1 | 05-04-1995 |
| | | | | ES | 2115127 T3 | 16-06-1998 |
| | | | | FR | 2710893 A1 | 14-04-1995 |
| | | | | JP | H07156825 A | 20-06-1995 |
| | | | | RU | 94035674 A | 10-07-1996 |
| | | | | TW | 286303 B | 21-09-1996 |
| | | | | US | 5496067 A | 05-03-1996 |
| US 6805401 | B2 | | 19-10-2004 | DE | 10302606 A1 | 28-08-2003 |
| | | | | JP | 4021672 B2 | 12-12-2007 |
| | | | | JP | 2003212158 A | 30-07-2003 |
| | | | | US | 2003137163 A1 | 24-07-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021091341 A